# EUROPEAN PATENT SPECIFICATION

(11) **EP 1 759 148 B1**
(45) Date of publication and mention of the grant of the patent: **14.05.2014**
(21) Application number: 05752670.9
(22) Date of filing: 14.06.2005
(51) Int. Cl.: F23J 3/02, F23J 15/06

(54) **A PLANT FOR HEATING BY COMBUSTION OF A SOLID FUEL**
ANLAGE ZUM HEIZEN DURCH VERBRENNUNG EINES FESTEN BRENNSTOFFS
INSTALLATION DE CHAUFFAGE PAR COMBUSTION D'UN COMBUSTIBLE SOLIDE

(30) Priority: 24.06.2004 SE 0401640
(43) Date of publication of application: 07.03.2007
(73) Proprietor: Janfire Aktiebolag, 662 24 Åmål (SE)
(72) Inventor: INGVARSSON, Robert, S-662 91 Åmål (SE)
(74) Representative: Andréasson, Ivar
(86) International application number: PCT/SE2005/000894
(87) International publication number: WO 2006/001746

(56) References cited:
- GB-A- 568 511
- US-A- 4 509 589
- US-A- 4 600 474
- US-A- 4 909 318
- PATENT ABSTRACTS OF JAPAN vol. 018, no. 196 (M-1589) 06 April 1994 & JP 06 002 813 A (EBARA CORP.) 11 January 1994

## Description

### TECHNICAL FIELD

The present invention relates to a plant for heating by combustion of solid fuel, in which flue gases from a combustion chamber are led from an outlet of the combustion chamber and through a heat exchanger in which heat from the flue gases is transferred to a cooling medium. Such a heating plant is known from document GB-A-568511.

### BACKGROUND OF THE INVENTION

Fuel fired boilers are used to heat houses e.g., heat being generated by combustion of solid fuels such as firewood or fuel pellets. By fuel pellets is understood pieces of combustible material achieved by pressing comminuted material such as sawdust at high pressure, to form continuous pieces that can be used as a fuel. In a fuel fired boiler, fuel is combusted to generate heat energy. In turn, the heat energy can be used to heat water or some other liquid medium that can be circulated to give heat to different parts of a building. The fuel combustion takes place in a combustion chamber and during combustion of the fuel, flue gases are formed and led away from the combustion chamber. As the flue gases contain a considerable amount of heat energy, it is desirable to be able to use this heat energy. Therefore, it is customary to lead the flue gases through flue ducts/flues in the form of a conduit that passes a heat exchanger. The heat exchanger can be seen as a cooling plant for the hot flue gases, in which the heat content of the flue gases is transferred to a cooling medium such as water that accordingly is being heated by the hot flue gases. Thereafter, the thus heated cooling medium can be circulated to heat different parts of a building, where after the cooling medium is returned to the heat exchanger. In order to transfer as much as possible of the flue gas heat energy to the cooling medium, the flue duct should be of good thermal conductivity.

Ashes are formed when fuel pellets are combusted in the combustion chamber. Generally, one distinguishes ashes in the combustion chamber from ashes going out with the flue gases. The ashes that remain in the combustion chamber are usually called bottom ash, and the ashes that go out with the flue gases are called fly ash. Accordingly, ash particles in the fly ash will go out with the flue gases in the flue duct. The fly ash going out with the flue gases tends partly to stay in the flue duct or the flues to settle on the inside thereof. Coatings on the inside of the flue ducts can also be formed by soot. Soot is a coating caused by imperfect combustion. Coatings of fly ash and/or soot on the inside of the flue duct act isolating and impair the heat transfer from the flue gases to the cooling medium. When heat exchange is impaired, the temperature of the output flue gases rises, since more of the heat content stays in the flue gases instead of being transferred to the cooling medium. Accordingly, the efficiency of the plant is impaired. The ashes formed at combustion also give problems in that the bottom ash must be removed from the combustion chamber.

Hence, it is an object of the present invention to achieve a heating plant using solid fuel to heat a cooling medium, in which the heat transfer to the cooling medium has been rendered more effective. Yet another object of the invention is to provide an efficient way of removing ashes from the combustion chamber. It is also an object of the present invention to prevent fly ash and/or soot from forming coatings on the inside of the flue duct. These and other objectives are achieved by the present invention, as will be described in the following.

### ACCOUNT OF THE INVENTION

The invention relates to a heating plant comprising a combustion chamber for combustion of solid fuel, in which combustion chamber the solid fuel is combusted. An outlet of the combustion chamber is suitably arranged at the bottom of the combustion chamber. The plant also comprises a heat exchanger in the form of a cooling plant containing a cooling medium, i.e. the cooling plant is designed to hold a cooling medium. A flue duct is connected to the outlet of the combustion chamber, which flue duct is arranged to pass through the cooling plant, such that heat energy in the flue gases from the combustion chamber can be transferred to the cooling medium. Downstream the cooling plant, there is a separation device, e.g. a cyclone, for separation of ashes from the flue gases. A flue fan is arranged to draw flue gases through the flue duct. The fan is arranged in connection with the separation device (a cyclone e.g.). Accordingly, the fan is arranged in connection with the flue duct, downstream the heat exchanger. An ash collector is preferably provided in connection with the separation device. According to the invention, the flue duct and the fan are dimensioned to maintain a velocity of flow of at least 15 m/s in the flue duct, all the way from the outlet of the combustion chamber to the ash separation device, or at least to the point where the flue duct exits the heat exchanger. Preferably, the flue duct and the fan are dimensioned to be able to maintain a velocity of flow of at least 18 m/s in the flue duct, all the way from the outlet of the combustion chamber and to the separation device.

Suitably, the ash collector is detachably arranged at a lower end of a conduit from the separation device.

Advantageously, the device according to the invention is designed such that parts of the flue duct project from the cooling plant and can be detached from the rest of the flue duct. Thereby, the flue duct will be accessible for cleaning.

According to a particularly advantageous aspect, the plant only comprises a single flue duct, which means that all flue gases will pass the same duct.

According to another advantageous aspect of the invention, a movable ash scraper can be provided in the combustion chamber in order to shove ashes in a direction towards the outlet of the combustion chamber.

### BRIEF DESCRIPTION OF THE DRAWINGS

- Fig. 1: shows a cross-section of an example of a prior art combustion device.
- Fig. 2: shows the same plant as in Fig. 1, partly in cross-section and in a front view.
- Fig. 3: shows a cross-section of an embodiment of the present invention.
- Fig. 4: shows a part of the plant shown in Fig. 3, in a perspective view.
- Fig. 5: shows a second embodiment of the invention.
- Fig. 6: shows a detail of an advantageous embodiment of the invention.
- Fig. 7: shows an advantageous aspect of the embodiment shown in Fig. 6.
- Fig. 8: shows a fan curve for the flue fan of the plant.

### DETAILED DESCRIPTION OF THE INVENTION

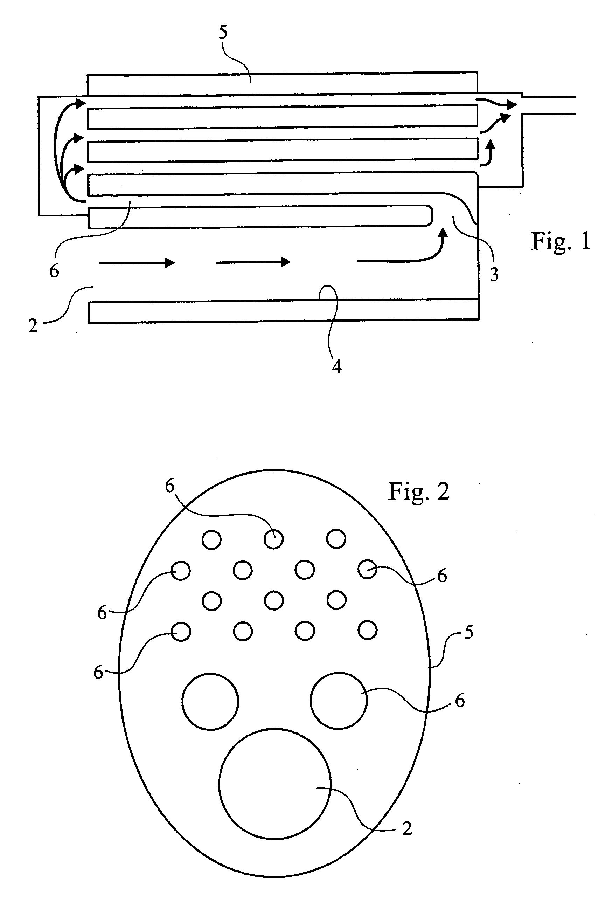

First, a plant according to prior art is described with reference to Figs. 1 and 2. The plant 1 shown in Fig. 1 comprises a combustion chamber 2 in which fuel pellets are combusted, usually by use of a burner (not shown). Flue gases from the combustion leave the combustion chamber via an outlet 3, to pass a flue duct 6. As indicated in Fig. 1, the flue duct 6 branches in a plurality of ducts 6. The flue ducts 6 are passing a heat exchanger 5 in which the heat content of the flue gases is transferred to a cooling medium, usually water, in the heat exchanger 5. As explained above, fly ash and soot in the flue gases tend to stay in the flue duct/flue ducts 6, settling on the inside thereof. In existing plants, the velocity of flow of the flue gases is comparatively low, in practice about 6 m/s. The inventor of the present invention has found that if the velocity of flow in the flue duct 6 is increased, essentially all ash can be removed through the flue duct 6, such that also the bottom ash is removed through the flue duct 6. The inventor has found that the bottom ash can act then to blast the inside of the flue duct 6, such that the bottom ash prevents formation of coatings of fly ash on the inside of the flue duct 6. As such, a high velocity of flow will also diminish the risk of fly ash remaining as a coating on the inside of the flue duct 6. Hence, at adequately high velocity of flow, the problem of coatings in the flue duct can be eliminated or considerably decreased, such that only a very small amount of the fly ash remains in the flue duct 6 in the form of coatings on the inside walls of the flue duct 6.

Therefore, the present inventor has found that the velocity of flow in the flue duct should be increased to at least 15 m/s. By practical experiments, the inventor has found that particularly good results can be achieved when the velocity of flow in the flue duct 6 is increased to 18 m/s or more.

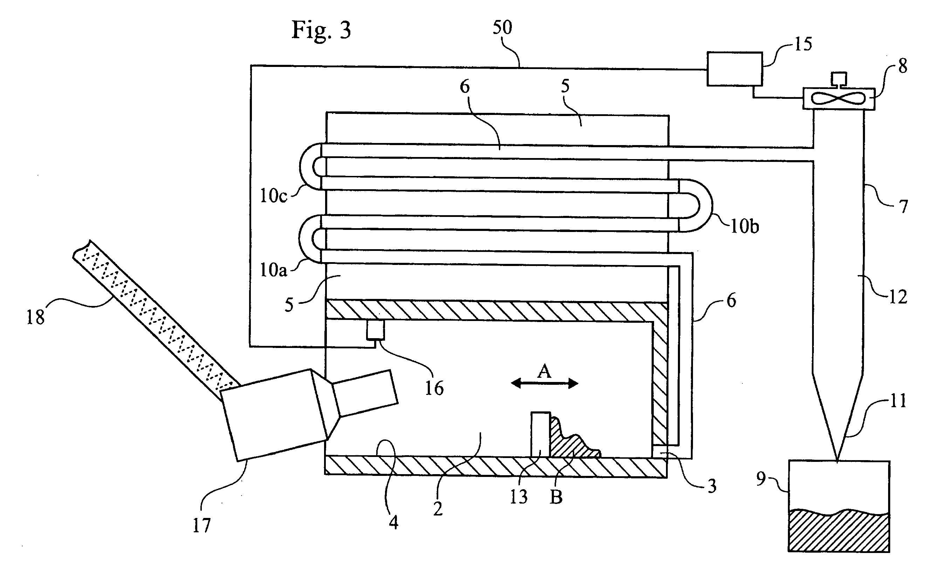

The invention will now be explained in greater detail with reference to Fig. 3. The heating plant 1 according to the invention comprises a combustion chamber 2 for combustion of solid fuel, in particular fuel pellets of sawdust and similar materials, in which combustion chamber the solid fuel is combusted when the plant is used. The figure shows schematically that a burner 17 is arranged in the combustion chamber (the boiler), and that the burner 17 can be fed with fuel pellets by a conveyor 18, such as a worm conveyor. An outlet 3 from the combustion chamber 2 is arranged to enable removal of hot flue gases from the combustion chamber 2. In preferred embodiments, the outlet 3 is arranged at the bottom 4 of the combustion chamber 2 shown in Fig. 3. In connection with the combustion chamber 2, a heat exchanger 5 containing a cooling medium is arranged. It is to be understood that during operation of the plant, the cooling medium circulates in a closed cycle. Advantageously, the cooling medium is water. A flue duct 6 is connected to the outlet 3 of the combustion chamber 2, which flue duct 6 passes through the cooling plant 5, such that heat energy in the flue gases from the combustion chamber 2 can be transferred to the cooling medium. In many realistic applications, the temperature of the flue gases leaving the combustion chamber 2 can be about 500 °C at the outlet 3, while effort is made to cool the flue gases in the heat exchanger/cooling plant 5 such that the temperature of the flue gases are considerably lower after the heat exchanger/cooling plant 5, for example about 110 °C. Downstream the cooling plant 5, a device 7 is arranged to separate ashes from the flue gases. Such a device for separation of ash from the flue gases can be a cyclone 7. A cyclone separates ashes from the flue gases by use of centrifugal forces, in a manner known per se, and therefore no further explanation is needed in this connection. Ashes separated from the flue gases in the separation device 7, will sink down in a vertical conduit 12. A fan 8 is arranged in connection with the ash separator 7, to draw flue gases via the flue duct 6. It should be understood that then, the fan 8 is arranged in connection with the flue duct 6 at a location downstream the heat exchanger 5. An ash collector 9 is arranged in connection with the ash separator 7, which ash collector 9 is preferably detachably arranged at a lower end 11 of the conduit 12 from the ash separator 7.

The flue duct 6 and the flue fan 8 (suitably including a not shown drive for the fan) are dimensioned to maintain a velocity of flow of at least 15 m/s in the flue duct 6, all the way from the outlet 3 of the combustion chamber 2 to the ash separator 7, or to the fan 8. Preferably, the flue duct 6 and the fan 8 are dimensioned to be able to maintain a velocity of flow of at least 18 m/s in the flue duct 6, all the way from the outlet 3 of the combustion chamber 2 and all the way to the fan 8 or to the ash separator 7. In experiments, the inventor has found that at a velocity of flow of 18 m/s, there was considerably less ash coatings on the inside of the flue duct 6 as compared to at a velocity of flow of 6 m/s.

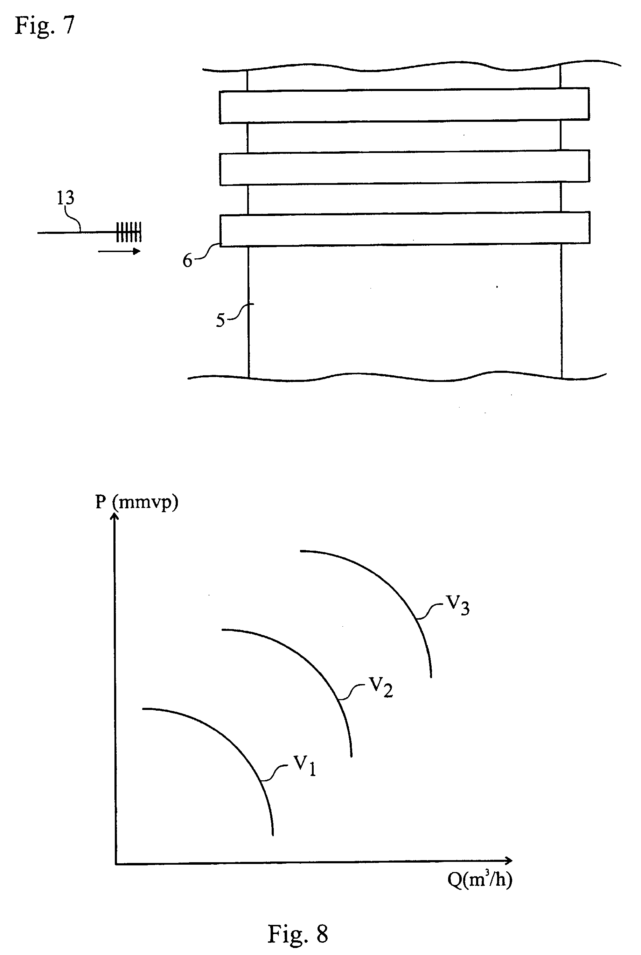

The velocity of flow in the flue duct 6 depends both on the flue duct itself and on the fan 8. It is now referred to Fig. 8, showing fan curves at different rotational speed. The volume flow Q maintained by the fan 8 depends on the pressure drop P against which the fan operates, as well as, for a given fan, its rotational speed. The pressure drop from the outlet 3 of the combustion chamber 2 and up to the fan 8, depends among other things on the cross-sectional area and length of the flue duct 6, as well as on the friction in the flue duct. A more rugged surface on the inside of the flue duct results in an increased pressure drop. In the same way, a longer duct 6 or a duct 6 of smaller cross-sectional area, results in a larger pressure drop to be overcome by the fan 8. As already mentioned, the volume flow also depends on the rotational speed at which the fan 8 operates. Fig. 8 shows three curves V₁, V₂ and V₃, which different curves represent the performance of one and the same fan at different rotational speeds. It is realised that curve V₁ shows the conditions at a relatively low rotational speed, while curve V₂ shows the conditions at a higher rotational speed. Curve V₃ represents an even higher rotational speed. The velocity of flow can be calculated as the volume flow divided with the cross-sectional area of the flue duct 6. The exact dimensions of the flue duct 6 may of course vary within wide limits. In a plant intended to heat a single-family house, the flue duct may e.g. be of a diameter in the magnitude of 50 mm. The fan 8 in Fig. 3, shown to be positioned in connection with the ash separator 7, can be controlled by a control member 15 that may be a PC for example. Fig. 3 shows schematically that a pressure gauge 16 is arranged in or in connection with the combustion chamber 2. Via a connection 50, the pressure gauge 16 is connected with the control member 15. In a preferred embodiment, the control member 15 can be set for a desired vacuum value in the combustion chamber 2. If the vacuum in the combustion chamber 2 is less than the desired value, the control member 15 will increase the rotational speed of the fan 8 until the vacuum in the combustion chamber 2 returns to the desired value. Thereby, flue gases are avoided from "smoking out", i.e. from coming out at the burner 17 instead of through the flue duct 6.

As shown in Fig. 3, a movable ash scraper 13 is suitably provided in the combustion chamber in order to shove bottom ash B in a direction towards the outlet 3 of the combustion chamber 2. The ash scraper 13 is arranged to move forwards and backwards in the direction of the arrow A in Fig. 3. Suitably, the scraper 13 has a width corresponding to the inner width of the combustion chamber 2. Then, the bottom ash that is not directly sucked to the outlet 3 by the draught of the fan 8, can be shoved by the scraper 13 to the outlet 3, from where it can be led on through the flue duct 6.

The maintaining of an appropriate and predetermined vacuum in the combustion chamber can also ensure that the velocity of flow in the flue duct 6 is maintained at an appropriate level. It should be understood that the controlling of the fan 8 can be achieved also by control of the blade angle, as is known per se. Then, the control member 15 will control the blade angle in response to a signal from the gauge 16. As an alternative, or as a supplement to the vacuum measuring in the combustion chamber 2, it may be conceived to measure the velocity of flow in the flue duct 6, such that the control member controls the fan depending on the rate measured.

The fan 8 can also be controlled by on/off-controlling. On/off-controlling can be particularly suitable for house boilers.

It should also be understood that in many applications, such as for house boilers, the fan 8 need not necessarily operate continuously at a rotational speed high enough for bottom ash to be drawn through the flue duct all the time. It is conceivable then that in connection with the starting up of the fan 8, it is allowed to operate at maximum rotational speed, such that bottom ash is sucked through the flue duct 6, to exert a blasting effect on the inside of the flue duct 6. After some time, such as 1-2 minutes, the rotational speed can be lowered in order to decrease the energy consumption. Accordingly, the self-sweeping/self-cleaning function of the plant according to the invention need not necessarily be used continuously during operation. If a movable ash scraper 13 is used, it is also conceivable that the movable ash scraper 13 only moves in connection with the starting up of the plant, in order to shove bottom ash towards the outlet 3 in connection with the starting up. Thereafter, the ash scraper 13 can return to its starting position and stay there until the next starting up. In larger plants operated continuously for a longer time, the ash scraper 13 can move back and forth at predetermined time intervals.

According to the prior art represented in Figs. 1 and 2, the flue gases are led through a plurality of parallel ducts 6, which means that not all flue gases will pass the same way through the heat exchanger 5. It has been shown that this can lead to some unfavourable results. This is the case since the inventor of the present invention has found that the flue gases tend to distribute unequally over the different ducts, such that the flow will be lower in some ducts 6. If there are several parallel conduits, the gases can, due to turbulence, choose the easiest way, whereas the more sluggish way tends after some time to be increasingly blocked up by fly ash.

Therefore, in a preferred embodiment, the inventor has considered an alternative design that will be explained in more detail in the following. According to such a particularly preferred embodiment of the invention, the device comprises only a single flue duct 6. By using only a single flue duct 6, through which all flue gases have to pass, the advantage is attained that the flow as well as the velocity of flow can be more effectively controlled than in case of several parallel flows.

It should also be understood that the cross-sectional area of the flue duct need not necessarily be constant all the way from the outlet 3 of the combustion chamber. When the flue gases pass through the flue duct 6, their temperature will decrease considerably. When temperature sinks, the volume of the flue gases decreases. In order to maintain the velocity of flow in the flue duct 6, it may therefore be suitable to let the cross-sectional area of the flue duct to decrease in the direction of flow of the flue gases. If the cross-section of the flue duct is circular, its diameter can hence be larger immediately downstream the outlet 3 of the combustion chamber than at the connection to the ash separator 7. It is realised that consideration thereto will have to be taken when dimensioning the flue duct as well as the fan and its power requirement, in order to ensure that the required velocity of flow can be achieved.

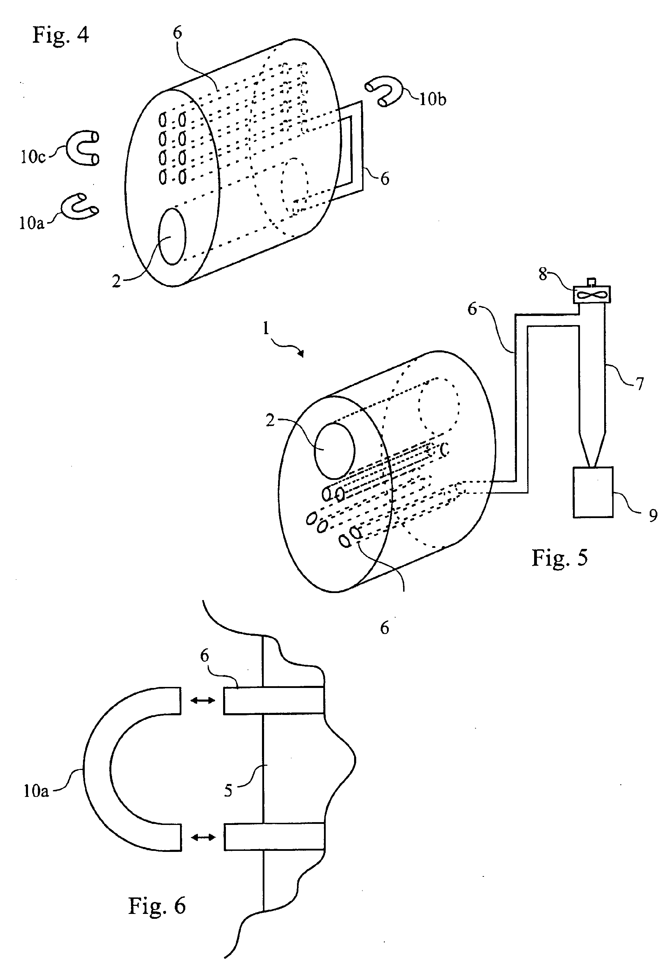

As is shown in Fig. 6, parts 10a, 10b, 10c of the flue duct 6 can, in the preferred embodiment of the invention, project from the heat exchanger/cooling plant 5 and be arranged to be detachable from the rest of the flue duct 6, such that the flue duct 6 is accessible for cleaning. The parts 10a, 10b, 10c can be detachable pipe bends 10a, 10b, 10c. If there is a need of cleaning the flue duct 6, the pipe bends 10a, 10b, 10c can be easily removed from the rest of the flue duct 6. Then, it is easy to insert a brush 13 in the flue duct 6, as is shown in Fig. 7, where after the brush 13 (or some other tool) is used to remove coatings from the inside of the flue duct 6. It should be understood that by the increased velocity of flow in the flue duct, the need of such cleaning is considerably reduced, but that the detachable pipe bends 10a, 10b, 10c enable easy cleaning if the need arises all the same.

It should be understood that embodiments are conceivable in which the flue duct 6 does not project from the heat exchanger 5 until it exits therefrom. Embodiments are conceivable for example in which the heat exchanger/cooling plant 5 completely surrounds the combustion chamber 2, and in which the flue duct 6 forms a spiral around the combustion chamber 2. Then, the flue duct would follow a continuous curve.

Fig. 3 shows that the cyclone 7 has a vertical conduit 12, the lower end 11 of which being connected to an ash collector 9. Preferably, the collector 9 is detachably arranged at the lower end 11. By the ash collector 9 being separate from the combustion chamber 2, the advantage is attained that ash emptying can take place without direct access of the combustion chamber 2 itself, and without stopping the combustion in the combustion chamber 2. The ash collector 9 is a preferred component, but embodiments are conceivable without a dedicated ash collector.

An alternative embodiment of the invention will now be explained with reference to Fig. 5. In the embodiment shown in Fig. 3, the combustion chamber 2 is positioned vertically below the heat exchanger 5 and the flue gases are drawn vertically up from the outlet 3 of the combustion chamber. In the embodiment according to Fig. 6, the combustion chamber 2 is however positioned vertically above the heat exchanger 5, and accordingly the flue gases will be sucked vertically down through the flue duct 6. Thereby, the advantage is attained among other things, that it is easier to draw the bottom ash.

An additional aspect of the invention will now be explained with reference to Figs. 4 and 5. In Fig. 3, it is shown how the pipe bends 10a, 10b, 10c of the flue duct 6 are all bent in a vertical plane. In Figs. 4 and 5 it is suggested that parts of the flue duct 6 can be positioned in the same horizontal plane, connected to each other by pipe bends 10 bent in a horizontal plane or an at least partially horizontal plane. Then, the flue duct 6 can have parallel parts in which the flue gases flow in opposite directions. Thereby, heat transfer is increased.

A number of advantages are obtained by the invention. By operation at higher velocity of flows, heat transfer is increased which means that the heat transfer area can be made smaller, i.e. the flue duct can be made shorter. The bottom ash forms a blasting medium that sweeps away soot residues in the flue duct. Accordingly, by the plant being self-sweeping, a low and constant temperature can be achieved in the output flue gases, and consequently a better efficiency in the plant. A single fan can be used. The risk of "smoking", such that the flue gases exit at the burner instead of via the flue duct, is eliminated or considerably reduced.

It should be understood that dimensions and reachable efficiency levels can vary within very wide limits.

It should be understood that in preferred embodiments, the heat exchanger/cooling plant 5 is arranged in direct connection with the combustion chamber 2. Embodiments are conceivable however in which the heat exchanger is arranged at a distance from the combustion chamber, such that the flue duct 6 will pass through air or ground e.g., before it reaches the heat exchanger.

If the outlet 3 of the combustion chamber 2 is arranged at the bottom of the combustion chamber, the advantage is attained that it is easier to draw bottom ash into the outlet, to be led through the flue duct 6.

It should be realised that the idea of an ash scraper arranged to shove bottom ash to an outlet in the bottom of the combustion chamber can be used independent of the other design of the plant, for example to prepare for a later conversion of a plant. If an ash scraper is arranged to shove ashes to the outlet, this can contribute to evacuation of at least a part of the bottom ash also in plants in which the velocity of flow is too low for any true blasting effect to be achieved.

It should also be realised that the idea of controlling the rotational speed of the fan and/or its blade angle, as a function of a vacuum measured in the combustion chamber or a velocity of flow measured in the flue duct, can be applied independently of the other design and dimensioning of the plant.

It should also be realised that the plant according to the invention can comprise software, e.g. in the control member 15. The software can be used to control the fan depending on the vacuum measured in the combustion chamber and/or the velocity of flow in the flue duct.

It should be understood that in the dimensioning, it is suitable to take into consideration the temperature of the flue gases exiting the combustion chamber in each single operating case. Depending on a number of factors, the temperature of these can vary, and in principle it can be as low as 100 °C, but more realistically it is 400-500 °C or more.

## Claims

1. A heating plant (1) comprising a combustion chamber (2) for combustion of fuel pellets (F), an outlet (3) from the combustion chamber (2), a heat exchanger (5) arranged in connection with the combustion chamber (2), a flue duct (6) connected to the outlet (3) of the combustion chamber (2), which flue duct (6) passes through said heat exchanger (5), such that heat energy in the flue gases from the combustion chamber (2) can be transferred to a cooling medium in the heat exchanger, a device (7) for separation of ash from the flue gases and positioned downstream of the heat exchanger (5), whereby a fan (8) is arranged in connection with the ash separator (7) in order to draw flue gases, fly ash and bottom ash through the flue duct (6), the flue duct (6) and the fan (8) being dimensioned to maintain a velocity of flow of at least 15 m/s in the flue duct (6), all the way from the outlet (3) of the combustion chamber (2) and up to the ash separator device (7), in order to achieve a blasting effect on the inside of the flue duct by bottom ash particles being drawn through the flue duct (6).

2. A heating plant according to claim 1, **characterised in that** the flue duct (6) and the fan (8) are dimensioned to maintain a velocity of flow of at least 18 m/s all the way from the outlet (3) of the combustion chamber (2) and up to the device (7) for separation of ash from the flue gases.

3. A heating plant according to claim 1 or 2, **characterised in that** parts (10a, 10b, 10c) of the flue duct (6) project from the cooling plant (5), which parts are detachable from the rest of the flue duct (6), such that the flue duct (6) becomes accessible for cleaning.

4. A heating plant according to any one of the preceding claims, **characterised in that** the device comprises no more than a single flue duct (6).

5. A heating plant according to claim 1, **characterised in that** the device (7) for separation of ash from the flue gases is a cyclone (7), and **in that** an ash collector (9) is detachably arranged at a lower end (11) of a conduit (12) from the cyclone (7).

6. A heating plant according to claim 1, **characterised in that** a movable ash scraper (13) is arranged in the combustion chamber in order to be able to shove ashes towards the outlet (3) of the combustion chamber (2).

7. A heating plant according to claim 1, **characterised in that** the outlet (3) from the combustion chamber (2) is positioned at the bottom (4) of the combustion chamber (2).

8. A heating plant according to any one of the preceding claims, **characterised in that** the fan (8) is arranged to be operated with a variable rotational speed.

9. A heating plant according to any one of claims 1-7, **characterised in that** the fan (8) is arranged to be operated with a variable blade angle.

10. A heating plant according to claim 8 or 9, **characterised in that** the fan (8) is arranged to be controlled as a function of the pressure level in the combustion chamber (2).

## Patentansprüche

1. Heizanlage (1), die einen Brennraum (2) zur Verbrennung von Brennstoffpellets (F), einen Ausgang (3) vom Brennraum (2), einen in Verbindung mit dem Brennraum (2) angeordneten Wärmetauscher (5), einen mit dem Ausgang (3) des Brennraums (2) verbundenen Abgaskanal (6), wobei der Abgaskanal (6) durch den Wärmetauscher (5) geht, so dass Wärmeenergie in den Abgasen vom Brennraum (2) zu einem Kühlmittel im Wärmetauscher übertragen werden kann, eine Vorrichtung (7) zur Trennung von Asche von den Abgasen und stromabwärts hinter dem Wärmetauscher (5) positioniert aufweist, wobei ein Ventilator (8) in Verbindung mit dem Ascheseparator (7) angeordnet ist, um Abgase, Flugasche und Bettasche durch den Abgaskanal (6) abzuziehen, wobei der Abgaskanal (6) und der Ventilator (8) bemessen sind, um eine Strömungsgeschwindigkeit von mindestens 15 m/s im Abgaskanal (6) vom Ausgang (3) des Brennraums (2) bis zur Ascheseparatorvorrichtung (7) aufrechtzuerhalten, um eine Strahlwirkung auf der Innenseite des Abgaskanals dadurch zu erreichen, dass Bettascheteilchen durch den Abgaskanal (6) abgezogen werden.

2. Heizanlage nach Anspruch 1, **dadurch gekennzeichnet, dass** der Abgaskanal (6) und der Ventilator (8) bemessen sind, um eine Strömungsgeschwindigkeit von mindestens 18 m/s vom Ausgang (3) des Brennraums (2) bis zur Vorrichtung (7) zur Trennung von Asche von den Abgasen aufrechtzuerhalten.

3. Heizanlage nach Anspruch 1 oder 2, **dadurch gekennzeichnet, dass** Teile (10a, 10b, 10c) des Abgaskanals (6) von der Kühlanlage (5) vorstehen, welche Teile vom Rest des Abgaskanals (6) lösbar sind, so dass der Abgaskanal (6) für die Reinigung zugänglich wird.

4. Heizanlage nach einem der vorhergehenden Ansprüche, **dadurch gekennzeichnet, dass** die Vorrichtung nicht mehr als einen einzigen Abgaskanal (6) aufweist.

5. Heizanlage nach Anspruch 1, **dadurch gekennzeichnet, dass** die Vorrichtung (7) zur Trennung von Asche von den Abgasen ein Zyklon (7) ist, und dass ein Aschekollektor (9) lösbar an einem unteren Ende (11) einer Leitung (12) vom Zyklon (7) angeordnet ist.

6. Heizanlage nach Anspruch 1, **dadurch gekennzeichnet, dass** ein beweglicher Aschekratzer (13) im Brennraum angeordnet ist, um Asche zum Ausgang (3) des Brennraums (2) schieben zu können.

7. Heizanlage nach Anspruch 1, **dadurch gekennzeichnet, dass** der Ausgang (3) vom Brennraum (2) am Boden (4) des Brennraums (2) positioniert ist.

8. Heizanlage nach einem der vorhergehenden Ansprüche, **dadurch gekennzeichnet, dass** der Ventilator (8) eingerichtet ist, um mit einer variablen Drehgeschwindigkeit betrieben zu werden.

9. Heizanlage nach einem der Ansprüche 1-7, **dadurch gekennzeichnet, dass** der Ventilator (8) eingerichtet ist, um mit einem variablen Flügelwinkel betrieben zu werden.

10. Heizanlage nach Anspruch 8 oder 9, **dadurch gekennzeichnet, dass** der Ventilator (8) eingerichtet ist, um abhängig vom Druckpegel im Brennraum (2) geregelt zu werden.

## Revendications

1. Installation de chauffage (1) comprenant une chambre de combustion (2) pour la combustion de pastilles de combustible (F), une sortie (3) de la chambre de combustion (2), un échangeur de chaleur (5) disposé en liaison avec la chambre de combustion (2), un conduit de fumée (6) relié à la sortie (3) de la chambre de combustion (2), lequel conduit de fumée (6) traverse ledit échangeur de chaleur (5) de sorte que l'énergie calorifique dans les gaz de fumée provenant de la chambre de combustion (2) puisse être transférée à un agent de refroidissement dans l'échangeur de chaleur, un dispositif (7) pour la séparation de cendres des gaz de fumée et positionné en aval de l'échangeur de chaleur (5), moyennant quoi un ventilateur (8) est disposé en liaison avec le séparateur de cendres (7) dans le but d'extraire des gaz de fumée, des cendres volantes et des mâchefers par le conduit de fumée (6), le conduit de fumée (6) et le ventilateur (8) étant dimensionnés pour maintenir une vitesse de flux d'au moins 14 m/s dans le conduit de fumée (6), tout le long de la sortie (3) de la chambre de combustion (2) et jusqu'au dispositif séparateur de cendres (7) dans le but d'atteindre un effet explosif à l'intérieur du conduit de fumée dû aux particules de mâchefers extraites par le conduit de fumée (6).

2. Installation de chauffage selon la revendication 1, **caractérisée en ce que** le conduit de fumée (6) et le ventilateur (8) sont dimensionnés pour maintenir une vitesse de flux d'au moins 18 m/s tout le long de la sortie (3) de la chambre de combustion (2) et jusqu'au dispositif (7) pour la séparation des cendres des gaz de fumée.

3. Installation de chauffage selon la revendication 1 ou 2, **caractérisée en ce que** des parties (10a, 10b, 10c) du conduit de fumée (6) font saillie de l'installation de refroidissement (5), lesquelles parties sont détachables du reste du conduit de fumée (6) de sorte que le conduit de fumée (6) devienne accessible pour le nettoyage.

4. Installation de chauffage selon l'une quelconque des revendications précédentes, **caractérisée en ce que** le dispositif ne comprend pas plus d'un seul conduit de fumée (6).

5. Installation de chauffage selon la revendication 1, **caractérisée en ce que** le dispositif (7) pour la séparation de cendres des gaz de fumée est un cyclone (7) et **en ce qu'**un collecteur de cendres (9) est disposé de manière détachable sur une extrémité inférieure (11) d'un conduit (12) du cyclone (7).

6. Installation de chauffage selon la revendication 1, **caractérisée en ce qu'**une racle de cendres mobile (13) est disposée dans la chambre de combustion dans le but de pouvoir pousser les cendres vers la sortie (3) de la chambre de combustion (2).

7. Installation de chauffage selon la revendication 1, **caractérisée en ce que** la sortie (3) de la chambre de combustion (2) est positionnée sur le fond (4) de la chambre de combustion (2).

8. Installation de chauffage selon l'une quelconque des revendications précédentes, **caractérisée en ce que** le ventilateur (8) est disposé de sorte à fonctionner à une vitesse de rotation variable.

9. Installation de chauffage selon l'une quelconque des revendications 1 à 7, **caractérisée en ce que** le ventilateur (8) est disposé de sorte à fonctionner avec un angle de pale variable.

10. Installation de chauffage selon la revendication 8 ou 9, **caractérisée en ce que** le ventilateur (8) est disposé de sorte à être commandé en fonction du niveau de pression dans la chambre de combustion (2).
